# EUROPÄISCHE PATENTSCHRIFT

(11) **EP 3 183 846 B1**
(45) Veröffentlichungstag und Bekanntmachung des Hinweises auf die Patenterteilung: **20.02.2019**
(21) Anmeldenummer: 15756117.6
(22) Anmeldetag: 04.08.2015
(51) Int. Cl.: H04L 12/413, H04L 12/40, H04L 1/00, G06F 11/10

(54) **TEILNEHMERSTATION FÜR EIN BUSSYSTEM UND VERFAHREN ZUM PRÜFEN DER RICHTIGKEIT EINER NACHRICHT**
SUBSCRIBER STATION FOR A BUS SYSTEM, AND METHOD FOR CHECKING THE CORRECTNESS OF A MESSAGE
STATION PARTICIPANTE POUR UN SYSTÈME DE BUS ET PROCÉDÉ DE CONTRÔLE DE L'EXACTITUDE D'UN MESSAGE

(30) Priorität: 20.08.2014 DE 102014216547
(43) Veröffentlichungstag der Anmeldung: 28.06.2017
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE); MUTTER, Arthur, 73765 Neuhausen (DE)
(86) Internationale Anmeldenummer: PCT/EP2015/067927
(87) Internationale Veröffentlichungsnummer: WO 2016/026689

(56) Entgegenhaltungen:
- US-A1- 2004 081 079

## Beschreibung

### Technisches Gebiet

Die vorliegende Erfindung betrifft eine Teilnehmerstation für ein Bussystem und ein Verfahren zum Prüfen der Richtigkeit einer Nachricht, die in dem Bussystem versendet wird, wobei die Teilnehmerstation und das Verfahren die Konfiguration eines Initialisierungswerts für einen Prüfsummengenerator ermöglichen.

### Stand der Technik

US2004/081079 A1 zeigt einen Kommunikationscontroller mit einem Buswächter, der das auf dem Bus angewendete zyklische zeitgesteuerte Flexray-Zugriffsschema überwacht. Mit a priori Wissen kann der Buswächter zwischen einer erlaubten Abweichung und einer verbotenen Abweichung unterscheiden.

Für die Kommunikation zwischen Sensoren und Steuergeräten hat das CAN-Bussystem eine weite Verbreitung gefunden. Beispielsweise wird es in Automobilen eingesetzt. Beim CAN-Bussystem werden Nachrichten mittels des CAN-Protokolls übertragen, wie es in der ISO11898 beschrieben ist. Insbesondere automobile Bussysteme entwickeln sich kontinuierlich zu höheren Bandbreiten, niedrigeren Latenzzeiten und strengerer Echtzeitfähigkeit. In jüngerer Zeit wurden hierfür zudem Techniken vorgeschlagen, wie beispielsweise CAN FD, bei welchem Nachrichten entsprechend Spezifikation "CAN with Flexible Data-Rate,

Specification Version 1.0" (Quelle http://www.semiconductors.bosch.de) bzw. entsprechend der in Überarbeitung befindlichen ISO11898-1 (aktuell als ISO11898-1 CD vorliegend) übertragen werden, usw. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet.

Die Erweiterung des CAN-Standards wurde neben vorrangig funktionalen Ergänzungen, wie z.B. TTCAN, in jüngerer Zeit mit CAN FD besonders hinsichtlich der möglichen (höheren) Datenrate und der nutzbaren Datenpaketgröße erweitert, wobei die ureigenen CAN-Eigenschaften besonders in Form der Arbitrierung erhalten wurden.

Probleme bestehen derzeit bei einer Berechnung der Prüfsumme eines CAN FD-Rahmens, wenn der Identifizierer des CAN FD-Rahmens mit vier dominanten Bits beginnt. Diese vier dominanten Bits bilden zusammen mit einem dominanten Anfangsbit des CAN FD-Rahmens, das auch Start-of-Frame-Bit genannt wird, eine sogenannte Stuff-Bedingung (stuff condition), gemäß welcher ein rezessives Stuff-Bit (Stopf-Bit) zwischen dem vierten und fünften Bit des Identifizierers eingefügt wird. Wird in diesem Fall lokal in einem Empfänger des CAN FD-Rahmens das dominante Anfangsbit des CAN FD-Rahmens mit einem rezessiven Bit überschrieben, interpretiert der Empfänger des CAN FD-Rahmens das erste dominante Bit des Identifizierers als Anfangsbit des Rahmens. Da es aufgrund des empfangenen rezessiven Stuff-Bit im Empfänger keine Stuff-Bedingung gibt, wird der Empfänger das rezessive Stuff-Bit als das vierte Bit des Identifizierers akzeptieren. Das folgende Bit wird als das fünfte Bit des Identifizierers akzeptiert und der Empfänger wird zurück in Phase mit dem Sender sein. Jedoch wird in diesem Fall das geänderte vierte Bit des Identifizierers bei der Prüfsumme am Ende des CAN FD-Rahmens nicht erkannt. Beispielsweise wird ein vom Sender gesendeter Identifizierer 0x001 vom Empfänger als 0x081 empfangen. Dies gilt sowohl für den 11-Bit-Identifizierer als auch den 29-Bit-Identifizierer bei CAN FD.

### Offenbarung der Erfindung

Daher ist es Aufgabe der vorliegenden Erfindung, eine Teilnehmerstation für ein Bussystem und ein Verfahren zum Prüfen der Richtigkeit einer Nachricht bereitzustellen, welche die zuvor genannten Probleme lösen. Insbesondere sollen eine Teilnehmerstation für ein Bussystem und ein Verfahren zum Prüfen der Richtigkeit einer Nachricht bereitgestellt werden, welche Bitfehler einer im Bussystem versendeten oder empfangenen Nachricht sicher erkennen können. Die Aufgabe wird durch eine Teilnehmerstation für ein Bussystem mit den Merkmalen des Anspruchs 1 gelöst. Die Teilnehmerstation umfasst eine Kommunikationssteuereinrichtung zum Erstellen oder Lesen zumindest einer Nachricht für/von mindestens eine/r weiteren Teilnehmerstation des Bussystems, bei welchem zumindest zeitweise ein exklusiver, kollisionsfreier Zugriff einer Teilnehmerstation auf eine Busleitung des Bussystems gewährleistet ist, einem Prüfsummengenerator zum Erzeugen einer Prüfsumme der Nachricht, um Bitfehler der Nachricht zu erkennen, und einem Konfigurationsregister zur Vorgabe, mit welchem Initialisierungswert der Prüfsummengenerator zum Start der Nachricht vorzuladen ist, wobei der Initialisierungswert in dem Konfigurationsregister gespeichert ist, wobei der Initialisierungswert von einer Software nach Bedarf vor Beginn einer Kommunikation im Bussystem geändert wird.

Mit der Teilnehmerstation ist es möglich, einen bisher fest vorgegebenen Initialisierungswert für einen Prüfsummengenerator je nach Bedarf zu ändern oder konfigurierbar zu machen. Dadurch kann die Teilnehmerstation, genauer gesagt ihr Prüfsummengenerator sowohl mit dem bisherigen Initialisierungswert von "0x00000" als auch mit einem neuen noch festzulegenden Initialisierungswert arbeiten. Dadurch können Bitfehler einer Nachricht des Bussystems durch Bilden eine Prüfsumme sicher erkannt werden.

Durch die frei wählbare Vorgabe des Initialisierungswerts für den Prüfsummengenerator ist die Teilnehmerstation auch bei weiteren Entwicklungen des Nachrichtenübertragungsstandards einfach an die weiteren Entwicklungen anpassbar. Auch wenn insbesondere für CAN FD beschlossen wird, den Standard nicht zu ändern, kann mit der Teilnehmerstation ein Übereinstimmungstest (Conformance-Test) bestanden werden. Auch kann die Teilnehmerstation dann wahlweise auch mit anderen, jetzt schon existierenden CAN FD-Teilnehmerstationen kommunizieren, welche den derzeit festgelegten Initialisierungswert verwenden.

Vorteilhafte weitere Ausgestaltungen der Teilnehmerstation sind in den abhängigen Patentansprüchen angegeben.

Gemäß einem Ausführungsbeispiel kann das Konfigurationsregister als überschreibbarer Speicher ausgestaltet sein.

Gemäß einem weiteren Ausführungsbeispiel kann das Konfigurationsregister aufweisen: mindestens ein änderbares Konfigurationsbit, und mindestens zwei Initialisierungswerte als fest gespeicherte Werte, wobei das mindestens eine änderbare Konfigurationsbit angibt, mit welchem der mindestens zwei Initialisierungswerte der Prüfsummengenerator zum Start der Nachricht vorzuladen ist.

Es ist denkbar, dass die Teilnehmerstation zudem aufweist: einen weiteren Prüfsummengenerator zum Erzeugen einer Prüfsumme der Nachricht, um Bitfehler der Nachricht zu erkennen, und ein weiteres Konfigurationsregister zur Vorgabe, mit welchem Initialisierungswert der weitere Prüfsummengenerator zum Start der Nachricht vorgeladen wird, wobei der Prüfsummengenerator zum Erzeugen einer Prüfsumme einer Nachricht ausgestaltet ist, die weniger als eine vorbestimmte Zahl von Datenbytes aufweist und der weitere Prüfsummengenerator zum Erzeugen einer Prüfsumme einer Nachricht ausgestaltet ist, die mehr als die vorbestimmte Zahl von Datenbytes aufweist. Hierbei kann die vorbestimmte Zahl von Datenbytes 16 sein.

Bei der zuvor beschriebenen Teilnehmerstation kann die Kommunikationssteuereinrichtung das Konfigurationsregister und das weitere Konfigurationsregister aufweisen.

Die zumindest eine Nachricht kann eine CAN FD-Nachricht sein.

Die zuvor beschriebene Teilnehmerstation kann Teil eines Bussystems sein, das zudem eine parallele Busleitung und mindestens zwei Teilnehmerstationen umfasst, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zum Prüfen der Richtigkeit einer Nachricht nach Patentanspruch 9 gelöst. Hierbei ist die Nachricht mit einer Kommunikationssteuereinrichtung einer Teilnehmerstation für/von mindestens eine/r weiteren Teilnehmerstation des Bussystems zu erstellen oder zu lesen, bei welchem zumindest zeitweise ein exklusiver, kollisionsfreier Zugriff einer Teilnehmerstation auf eine Busleitung des Bussystems gewährleistet ist, wobei das Verfahren die Schritte aufweist: Speichern eines Initialisierungswertes in einem Konfigurationsregister, wobei der Initialisierungswert von einer Software nach Bedarf vor Beginn einer Kommunikation im Bussystem geändert wird,
Vorgeben, mit dem Konfigurationsregister, mit welchem Initialisierungswert ein Prüfsummengenerator zum Start der Nachricht vorgeladen wird, wobei mit dem Prüfsummengenerator eine Prüfsumme der Nachricht zu berechnen ist, um Bitfehler der Nachricht zu erkennen.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine schematische Darstellung des Aufbaus einer Nachricht bei einem Bussystem gemäß dem ersten Ausführungsbeispiel;
Fig. 3 eine Ansicht zur Veranschaulichung der Funktion eines Konfigurationsregisters des Bussystems gemäß dem ersten Ausführungsbeispiel;
Fig. 4 ein vereinfachtes Blockschaltbild eines Bussystems gemäß einer Modifikation des ersten Ausführungsbeispiels; und
Fig. 5 eine Ansicht zur Veranschaulichung der Funktion eines Konfigurationsregisters des Bussystems gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

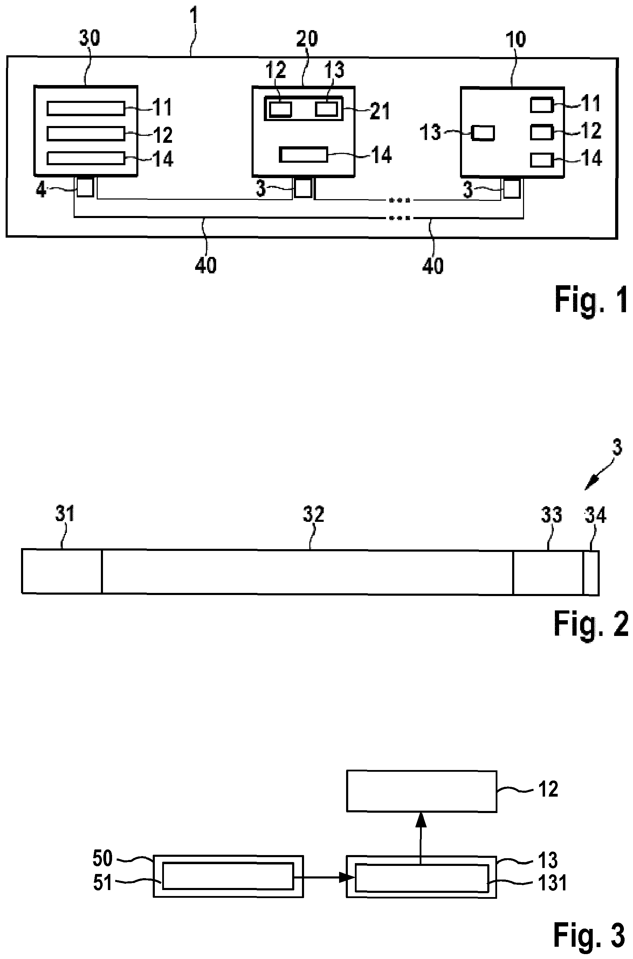

Fig. 1 zeigt ein Bussystem 1, das beispielsweise ein CAN-Bussystem, ein CAN FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an eine Busleitung 40 angeschlossen sind. Über die Busleitung 40 können Nachrichten 3, 4 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, hat die Teilnehmerstation 10 eine Kommunikationssteuereinrichtung 11, einen Prüfsummengenerator 12, ein Konfigurationsregister 13, und eine Sende-/Empfangseinrichtung 14. Die Teilnehmerstation 20 hat dagegen eine Kommunikationssteuereinrichtung 21, die einen Prüfsummengenerator 12 und ein Konfigurationsregister 13 umfasst, und eine Sende-/Empfangseinrichtung 14. Die Teilnehmerstation 30 hat eine Kommunikationssteuereinrichtung 11, einen Prüfsummengenerator 12 und eine Sende-/Empfangseinrichtung 14. Die Sende-/Empfangseinrichtungen 14 der Teilnehmerstationen 10, 20, 30 sind jeweils direkt an die Busleitung 40 angeschlossen, auch wenn dies in Fig. 1 nicht dargestellt ist.

Wie in Fig. 1 gezeigt, haben die Teilnehmerstationen 10, 20, 30 jeweils einen Prüfsummengenerator 12. Die Teilnehmerstationen 10, 20 weisen zudem jeweils ein Konfigurationsregister 13 auf. Bei der Teilnehmerstation 20 sind der Prüfsummengenerator 12 und das Konfigurationsregister 13 Teil der Kommunikationssteuereinrichtung 21. Bei der Teilnehmerstation 30 ist kein Konfigurationsregister 13 vorhanden, da der Initialisierungswert mit einem festen Initialisierungswert oder Initialisierungsvektor, beispielsweise "0x00000", vor Beginn der Kommunikation im Bussystem 1 fest vorgegeben ist und unveränderbar ist. Hierbei steht der Prefix "0x" für die hexadezimale Darstellung des Initialisierungswerts, wobei hexadezimal 0x0 in binär "0000" entspricht oder hexadezimal "0xA" in binär "1010" entspricht. Die Kommunikationssteuereinrichtung 21 der Teilnehmerstation 20 ist ansonsten gleich der Kommunikationssteuereinrichtung 11 der Teilnehmerstation 10.

Die Kommunikationssteuereinrichtung 11 dient zur Steuerung einer Kommunikation der jeweiligen Teilnehmerstation 10, 20, 30 über die Busleitung 40 mit einer anderen Teilnehmerstation der an die Busleitung 40 angeschlossenen Teilnehmerstationen 10, 20, 30. Der Prüfsummengenerator 12 dient zum Berechnen einer Prüfsumme, beispielsweise einer CRC-Prüfsumme (CRC = cyclic redundancy check = zyklische Redundanzprüfung) über vorbestimmte Bits der Nachrichten 3, 4. Das Konfigurationsregister 13 speichert vor Beginn der Kommunikation im Bussystem 1 einen Initialisierungswert, wie nachfolgend noch ausführlicher beschrieben. Die Kommunikationssteuereinrichtung 11 kann wie ein herkömmlicher CAN- oder CAN FD-Controller ausgeführt sein. Die Sende-/Empfangseinrichtung 14 kann wie ein herkömmlicher CAN- oder CAN FD-Transceiver ausgeführt sein.

Mit den beiden Teilnehmerstationen 20, 30 kann eine Bildung und dann Übertragung von Nachrichten 3 mit CAN FD oder auch mit höheren Datenraten als CAN FD realisiert werden. Die Teilnehmerstation 10 entspricht hingegen sowohl in Bezug auf ihre Sende- als auch ihre Empfangsfunktionalität einer herkömmlichen CAN- oder CAN FD-Teilnehmerstation und überträgt Nachrichten 4 gemäß dem derzeitigen CAN- oder CAN FD-Protokoll.

Fig. 2 zeigt sehr schematisch den Aufbau einer Nachricht 3. Demzufolge hat die Nachricht 3, die auch als Rahmen bezeichnet wird, einen Rahmenkopf 31, ein Datensegment 32 und eine Prüfsumme 33, der das Rahmenende 34 folgt. Der Rahmenkopf 31 ist am Anfang der Nachricht 3, das Datensegment 32 in der Mitte und die Prüfsumme 33 und das Rahmenende 34 am Ende der Nachricht 3 angeordnet. Die Prüfsumme 33 wird vom Prüfsummengenerator 12 erzeugt oder berechnet. Eine Nachricht 4 ist auf die gleiche Weise aufgebaut wie die Nachricht 3.

Fig. 3 veranschaulicht, dass in dem Konfigurationsregister 13 ein Initialisierungswert 131 für den Prüfsummengenerator 12 gespeichert ist. Der Initialisierungswert 131 wird von einer Software 51 beliebig je nach Bedarf vor Beginn der Kommunikation im Bussystem 1 geändert. Daher ist das Konfigurationsregister 13 als überschreibbarer Speicher ausgestaltet. Somit haben die Teilnehmerstationen 10, 20 im Unterschied zu der Teilnehmerstation 10 keinen festgelegten Initialisierungswert. Die Software 51 kann in einem externen Mikrocontroller 50 gespeichert sein, der mit der Kommunikationssteuereinrichtung 11 und/oder der Kommunikationssteuereinrichtung 21 verbunden sein kann. Der Mikrocontroller 50 kann Teil der jeweiligen Teilnehmerstation 10, 20 oder extern von diesen angeordnet sein.

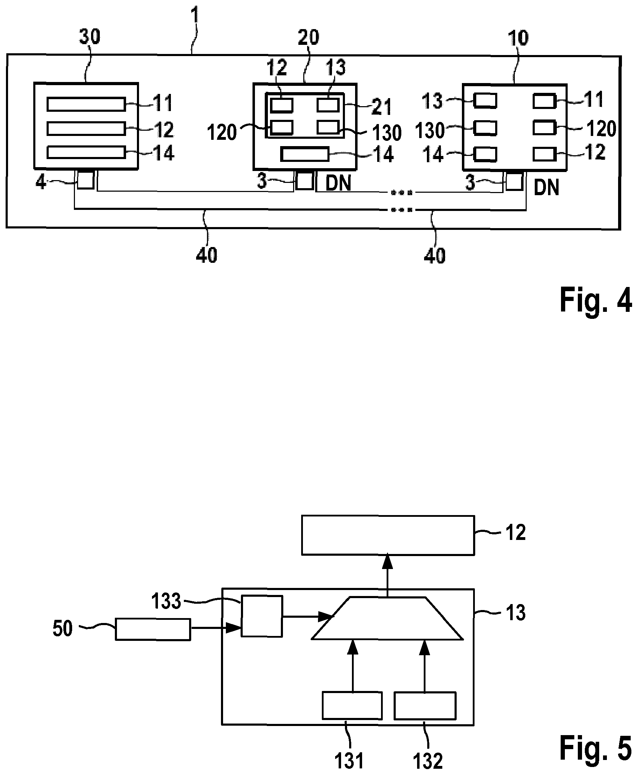

Fig. 4 zeigt eine Modifikation des ersten Ausführungsbeispiels. Werden in den Teilnehmerstationen 10, 20, 30 Prüfsummen 33 unterschiedlicher Längen berechnet, beispielsweise eine CRC-Prüfsumme mit 17 Bit oder eine CRC-Prüfsumme mit 21 Bit, was insbesondere abhängig von der Länge der Nachrichten 3, 4 erfolgt, haben die Teilnehmerstationen 10, 20 für jede der Längen einen separaten Prüfsummengenerator 12, 120. Dasselbe kann für die Teilnehmerstation 30 gelten, auch wenn dies in Fig. 4 nicht dargestellt ist. Bei CAN FD haben die Teilnehmerstationen 10, 20, 30 einen Prüfsummengenerator 12 für eine CRC-Prüfsumme mit 17 Bit, die für eine Nachricht 3 berechnet wird, die weniger als eine vorbestimmte Zahl DN von Datenbytes im Datensegment 32 (Fig. 2) aufweist, wie beispielsweise 16 Bytes. Darüber hinaus haben die Teilnehmerstationen 10, 20 einen weiteren Prüfsummengenerator 120 für eine CRC-Prüfsumme mit 21 Bit, die für eine Nachricht 3 berechnet wird, die mehr als die vorbestimmte Zahl DN von Datenbytes im Datensegment 32 (Fig. 2) aufweist, wie beispielsweise 20 Bytes. In diesem Fall ist in den Teilnehmerstationen 10, 20 auch für jeden Prüfsummengenerator 12, 120 ein Konfigurationsregister 13, 130 mit dem entsprechenden Initialisierungswert 131 vorgesehen. In der Teilnehmerstation 30 sind in einem solchen Fall jeweils ein fester, nicht änderbarer Initialisierungswert für die CRC-Prüfsumme mit 17 Bit und ein fester, nicht änderbarer Initialisierungswert für die CRC-Prüfsumme mit 21 Bit vorgesehen.

Das vorliegende Ausführungsbeispiel und seine Modifikation ist besonders vorteilhaft, wenn die möglichen Initialisierungswerte 131 noch nicht oder nur teilweise bekannt sind. In diesem Fall können die Initialisierungswerte 131 je nach Bedarf beliebig festgelegt werden.

Fig. 5 zeigt ein Konfigurationsregister 13 gemäß einem zweiten Ausführungsbeispiel. Hier sind in dem Konfigurationsregister 13 zwei verschiedene Initialisierungswerte 131, 132 fest gespeichert bzw. als Konstanten eingebaut. Zur Auswahl des jeweiligen Initialisierungswerts 131, 132 für einen Prüfsummengenerator 12 hat das Konfigurationsregister 13 ein Konfigurationsbit 133. Der Wert des Konfigurationsbits 133 wird von dem Mikrocontroller 50 bzw. seiner Software gesetzt. Je nach Wert des Konfigurationsbits 133 wird der zugeordnete Initialisierungswert 131, 132 für den jeweiligen Prüfsummengenerator 12 gewählt. In diesem Fall wird mit Hilfe des mindestens einen Konfigurationsbits 133 zwischen den zwei verschiedenen Initialisierungswerten 131, 132 umgeschaltet.

Das weitere Konfigurationsregister 130 ist bei dem vorliegenden Ausführungsbeispiel auf dieselbe Weise ausgeführt wie das Konfigurationsregister 13.

Ansonsten ist das Bussystem gemäß dem vorliegenden Ausführungsbeispiel auf die gleiche Weise ausgeführt, wie bei dem ersten Ausführungsbeispiel beschrieben.

Das vorliegende Ausführungsbeispiel ist vorteilhaft, wenn die möglichen Initialisierungswerte 131, 132 bereits bekannt sind.

In einer Modifikation des zweiten Ausführungsbeispiels kann auch mehr als ein Konfigurationsbit 133 vorhanden sein. In diesem Fall können mehr als zwei Initialisierungswerten 131, 132 fest gespeichert werden. In diesem Fall kann zwischen mehr als zwei Initialisierungswerten 131, 132 ausgewählt werden.

Gemäß einem dritten Ausführungsbeispiel ist das Konfigurationsregister 13 ausgeführt wie bei dem ersten Ausführungsbeispiel beschrieben. Dagegen ist das zweite oder weitere Konfigurationsregister 130 ausgeführt wie bei dem zweiten Ausführungsbeispiel beschrieben. Ansonsten ist das Bussystem gemäß dem vorliegenden Ausführungsbeispiel auf die gleiche Weise ausgeführt, wie bei dem ersten Ausführungsbeispiel beschrieben.

Alle zuvor beschriebenen Ausgestaltungen des Bussystems 1, der Teilnehmerstationen 10, 20, 30 und des Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Das Bussystem 1 gemäß den Ausführungsbeispielen ist insbesondere ein CAN-Netzwerk oder ein TTCAN-Netzwerk oder ein CAN FD-Netzwerk.

Die Anzahl und Anordnung der Teilnehmerstationen 10, 20, 30 in dem Bussystem 1 der Ausführungsbeispiele ist beliebig. Insbesondere können auch nur Teilnehmerstationen 10 oder Teilnehmerstationen 20 usw. in dem Bussystem 1 der Ausführungsbeispiele vorhanden sein.

## Patentansprüche

1. Teilnehmerstation (10; 20) für ein Bussystem (1), mit
- einer Kommunikationssteuereinrichtung (11; 21) zum Erstellen oder Lesen zumindest einer Nachricht (3) für/von mindestens eine/r weiteren Teilnehmerstation des Bussystems (1), wobei das Bussystem (1) eine Busleitung (40) einschließt und so ausgelegt ist, dass der Zugriff auf die Busleitung einer beliebigen teilnehmenden Teilnehmerstation (10,20,30) zumindest zeitweise als ein exklusiver, kollisionsfreier Zugriff gewährleistet ist,
- einem ersten Prüfsummengenerator (12; 120) zum Erzeugen einer Prüfsumme (33) der Nachricht (3), um Bitfehler der Nachricht (3) zu erkennen, und
- einem ersten Konfigurationsregister (13; 130) zur Vorgabe, mit welchem Initialisierungswert (131; 131, 132) der ersten Prüfsummengenerator (12; 120) zum Start der Nachricht (3) vorzuladen ist, wobei die Teilnehmerstation dazu angepasst ist, um den Initialisierungswert (131; 131, 132) in dem ersten Konfigurationsregister (13; 130) zu speichern, und
um den Initialisierungswert (131; 131, 132) von einer Software (51) nach Bedarf vor Beginn einer Kommunikation im Bussystem (1) ändern zu können.

2. Teilnehmerstation (10; 20) nach Anspruch 1, wobei das erste Konfigurationsregister (13; 130) als überschreibbarer Speicher ausgestaltet ist.

3. Teilnehmerstation (10; 20) nach Anspruch 1, wobei das erste Konfigurationsregister (13) aufweist mindestens ein änderbares Konfigurationsbit (133), und mindestens zwei Initialisierungswerte (131, 132) als fest gespeicherte Werte, wobei das mindestens eine änderbare Konfigurationsbit (133) angibt, mit welchem der mindestens zwei Initialisierungswerte (131, 132) der ersten Prüfsummengenerator (12) zum Start der Nachricht (3) vorzuladen ist.

4. Teilnehmerstation (10; 20) nach einem der vorangehenden Ansprüche, zudem mit einem zweiten Prüfsummengenerator (120) zum Erzeugen einer Prüfsumme (33) der Nachricht (3), um Bitfehler der Nachricht (3) zu erkennen, und einem zweiten Konfigurationsregister (130) zur Vorgabe, mit welchem Initialisierungswert (131; 131, 132) der zweite Prüfsummengenerator (120) zum Start der Nachricht (3) vorgeladen wird,
wobei der erste Prüfsummengenerator (12,120) ausgestaltet ist, eine Prüfsumme zu erzeugen, die weniger als eine vorbestimmte Zahl (DN) von Datenbytes aufweist, und
wobei der zweite Prüfsummengenerator (120) dazu ausgestaltet ist, dass die Prüfsumme, die er erzeugt, mehr als die vorbestimmte Zahl (DN) von Datenbytes aufweist.

5. Teilnehmerstation (10; 20) nach Anspruch 4, wobei die vorbestimmte Zahl (DN) von Datenbytes 16 ist.

6. Teilnehmerstation (20) nach einem der vorangehenden Ansprüche, wobei die Kommunikationssteuereinrichtung (21) das erste Konfigurationsregister (13) und das zweite Konfigurationsregister (130) aufweist.

7. Teilnehmerstation (10; 20) nach einem der vorangehenden Ansprüche, wobei die zumindest eine Nachricht (3) eine CAN FD-Nachricht ist.

8. Bussystem (1), mit
einer parallelen Busleitung (40), und
mindestens zwei Teilnehmerstationen (10, 20, 30), welche über die parallele Busleitung (40) derart miteinander verbunden sind, dass sie miteinander kommunizieren können,
wobei mindestens eine der mindestens zwei Teilnehmerstationen (10, 20, 30) eine Teilnehmerstation (10; 20) nach einem der vorangehenden Ansprüche ist, und
wobei die parallele Busleitung (40) die Busleitung (40) ist.

9. Verfahren zum Prüfen der Richtigkeit einer Nachricht (3), welche mit einer Kommunikationssteuereinrichtung (11; 21) einer Teilnehmerstation (10; 20) für/von mindestens eine/r weiteren Teilnehmerstation des Bussystems (1) zu erstellen oder zu lesen ist, wobei das Bussystem (1) eine Busleitung (40) einschließt und so ausgelegt ist, dass der Zugriff auf die Busleitung einer beliebigen teilnehmenden Teilnehmerstation (10,20,30) zumindest zeitweise als ein exklusiver, kollisionsfreier Zugriff gewährleistet ist, wobei das Verfahren die folgenden Schritte aufweist:
- Speichern eines Initialisierungswertes (131; 131, 132) in einem Konfigurationsregister (13; 130),
wobei die Teilnehmerstation dazu angepasst ist, den Initialisierungswert von einer Software nach Bedarf vor Beginn einer Kommunikation im Bussystem ändern zu können,
- Vorgeben, mit dem Konfigurationsregister (13; 130), mit welchem Initialisierungswert (131; 131, 132) ein Prüfsummengenerator (12; 120) zum Start der Nachricht (3) vorgeladen wird, wobei der Prüfsummengenerator (12; 120) dazu angepasst ist, eine Prüfsumme (33) der Nachricht (3) zu zu berechnen, und
wobei die Teilnehmerstation dazu angepasst ist, mit der Prüfsumme Bitfehler der Nachricht (3) zu erkennen.

## Claims

1. Subscriber station (10; 20) for a bus system (1), having
- a communication control device (11; 21) for creating or reading at least one message (3) for/from at least one further subscriber station of the bus system (1), wherein the bus system (1) includes a bus line (40) and is designed such that access to the bus line by any participating subscriber station (10, 20, 30) is at least intermittently ensured as an exclusive, collision-free access,
- a first checksum generator (12; 120) for generating a checksum (33) for the message (3) in order to detect bit errors in the message (3), and
- a first configuration register (13; 130) for prescribing the initialization value (131; 131, 132) with which the first checksum generator (12; 120) is to be preloaded at the start of the message (3), wherein the subscriber station is adapted to store the initialization value (131; 131, 132) in the first configuration register (13; 130), and to be able to alter the initialization value (131; 131, 132) from a piece of software (51) as required before the beginning of a communication in the bus system (1).

2. Subscriber station (10; 20) according to Claim 1, wherein the first configuration register (13; 130) is configured as an overwritable memory.

3. Subscriber station (10; 20) according to Claim 1, wherein the first configuration register (13) has at least one alterable configuration bit (133), and at least two initialization values (131, 132) as permanently stored values,
wherein the at least one alterable configuration bit (133) indicates that of the at least two initialization values (131, 132) with which the first checksum generator (12) is to be preloaded at the start of the message (3).

4. Subscriber station (10; 20) according to one of the preceding claims, also having a second checksum generator (120) for generating a checksum (33) for the message (3) in order to detect bit errors in the message (3), and a second configuration register (130) for prescribing the initialization value (131; 131, 132) with which the second checksum generator (120) is preloaded at the start of the message (3), wherein the first checksum generator (12, 120) is configured to generate a checksum that has fewer than a predetermined number (DN) of data bytes, and wherein the second checksum generator (120) is configured so that the checksum that it generates has more than the predetermined number (DN) of data bytes.

5. Subscriber station (10; 20) according to Claim 4, wherein the predetermined number (DN) of data bytes is 16.

6. Subscriber station (20) according to one of the preceding claims, wherein the communication control device (21) has the first configuration register (13) and the second configuration register (130).

7. Subscriber station (10; 20) according to one of the preceding claims, wherein the at least one message (3) is a CAN FD message.

8. Bus system (1) having
a parallel bus line (40), and
at least two subscriber stations (10, 20, 30) connected to one another via the parallel bus line (40) such that they can communicate with one another,
wherein at least one of the at least two subscriber stations (10, 20, 30) is a subscriber station (10; 20) according to one of the preceding claims, and wherein the parallel bus line (40) is the bus line (40) .

9. Method for checking the correctness of a message (3) that can be created or read, using a communication control device (11; 21) of one subscriber station (10; 20), for/from at least one further subscriber station of the bus system (1), wherein the bus system (1) includes a bus line (40) and is designed such that access to the bus line by any participating subscriber station (10, 20, 30) is at least intermittently ensured as an exclusive, collision-free access, wherein the method has the following steps:
- storing an initialization value (131; 131, 132) in a configuration register (13; 130),
wherein the subscriber station is adapted to be able to alter the initialization value from a piece of software as required before the beginning of a communication in the bus system,
- prescribing, using the configuration register (13; 130), the initialization value (131; 131, 132) with which a checksum generator (12; 120) is preloaded at the start of the message (3), wherein the checksum generator (12; 120) is adapted to calculate a checksum (33) for the message (3), and
wherein the subscriber station is adapted to use the checksum to detect bit errors in the message (3).

## Revendications

1. Station participante (10 ; 20) destinée à un système de bus (1), comprenant :
- un dispositif de commande de communications (11 ; 21) servant à créer ou lire au moins un message (3) à l'intention/en provenance d'au moins une autre station participante du système de bus (1), dans laquelle le système de bus (1) comprend une ligne de bus (40) et est conçu de manière à ce que l'accès à la ligne de bus d'une station participante (10, 20, 30) quelconque soit garanti au moins temporairement en tant qu'accès exclusif exempt de collision,
- un premier générateur de somme de contrôle (12 ; 120) servant à générer une somme de contrôle (33) du message (3) afin de détecter des erreurs binaires du message (3), et
- un premier registre de configuration (13 ; 130) servant à prédéfinir la valeur d'initialisation (131 ; 131, 132) avec laquelle le premier générateur de somme de contrôle (12 ; 120) doit être préchargé pour le lancement du message (3),
dans laquelle la station participante est conçue pour stocker la valeur d'initialisation (131 ; 131, 132) dans le premier registre de configuration (13 ; 130) et pour modifier selon les nécessités la valeur d'initialisation (131 ; 131, 132) d'un logiciel (51) avant le début d'une communication sur le système bus (1).

2. Station participante (10 ; 20) selon la revendication 1, dans laquelle le premier registre de configuration (13 ; 130) est réalisé sous la forme d'une mémoire réinscriptible.

3. Station participante (10 ; 20) selon la revendication 1, dans laquelle le premier registre de configuration (13) comporte au moins un bit de configuration modifiable (133) et au moins deux valeurs d'initialisation (131, 132) en tant que valeurs stockées de manière fixe, dans laquelle ledit au moins un bit de configuration modifiable (133) indique celle desdites au moins deux valeurs d'initialisation (131, 132) avec laquelle le premier générateur de somme de contrôle (12) doit être préchargé pour le lancement du message (3).

4. Station participante (10 ; 20) selon l'une des revendications précédentes, comprenant en outre un second générateur de somme de contrôle (120) servant à générer une somme de contrôle (33) du message (3) afin de détecter des erreurs binaires du message (3), et un second registre de configuration (130) servant à prédéfinir la valeur d'initialisation (131 ; 131, 132) avec quelle le second générateur de somme de contrôle (120) est préchargé pour le lancement du message (3),
dans laquelle le premier générateur de somme de contrôle (12, 120) est configuré pour générer une somme de contrôle qui comporte moins d'un nombre prédéterminé (DN) d'octets de données, et dans laquelle le second générateur de somme de contrôle (120) est configuré de manière à ce que la somme de contrôle qu'il génère comporte plus que le nombre prédéterminé (DN) d'octets de données.

5. Station participante (10 ; 20) selon la revendication 4, dans laquelle le nombre prédéterminé (DN) d'octets de données est de 16.

6. Station participante (20) selon l'une des revendications précédentes, dans laquelle le dispositif de commande de communications (21) comprend le premier registre de configuration (13) et le second registre de configuration (130).

7. Station participante (10 ; 20) selon l'une des revendications précédentes, dans laquelle ledit au moins un message (3) est un message CAN FD.

8. Système de bus (1) comprenant
une ligne de bus parallèle (40) et
au moins deux stations participantes (10, 20, 30) qui sont reliées entre elles par l'intermédiaire de la ligne de bus parallèle (40) de manière à ce qu'elles puissent communiquer entre elles,
dans laquelle au moins l'une desdites au moins deux stations participantes (10, 20, 30) est une station participante (10 ; 20) selon l'une des revendications précédentes, et
dans laquelle la ligne de bus parallèle (40) est la ligne de bus (40).

9. Procédé pour vérifier l'exactitude d'un message (3) qui doit être créé ou lu au moyen d'un dispositif de commande de communications (11 ; 21) d'une station participante (10 ; 20) à l'intention/en provenance d'au moins une autre station participante du système de bus (1), dans lequel le système de bus (1) comprend une ligne de bus (40) et est configuré de manière à ce que l'accès à la ligne de bus d'une station participante (10, 20, 30) quelconque soit garanti au moins temporairement en tant qu'accès exclusif exempt de collision,
dans lequel le procédé comprend les étapes consistant à :
- stocker une valeur d'initialisation (131 ; 131, 132) dans un registre de configuration (13 ; 130),
dans lequel la station d'abonné est conçue pour pouvoir modifier selon les nécessités la valeur d'initialisation d'un logiciel avant le début d'une communication sur le système bus,
- prédéfinir, au moyen du registre de configuration (13 ; 130), la valeur d'initialisation (131 ; 131, 132) avec laquelle un générateur de somme de contrôle (12 ; 120) est préchargé pour le lancement du message (3), dans lequel le générateur de somme de contrôle (12 ; 120) est conçu pour calculer une somme de contrôle (33) du message (3), et
dans lequel la station participante est conçue pour détecter des erreurs binaires du message (3) au moyen de la somme de contrôle.
